## Europäisches Patentamt
## European Patent Office
## Office européen des brevets

(19)

(11) Veröffentlichungsnummer: **0 116 667**
**B1**

(12) **EUROPÄISCHE PATENTSCHRIFT**

(45) Veröffentlichungstag der Patentschrift:
24.09.86

(51) Int. Cl.⁴: **F 16 K 31/00**

(21) Anmeldenummer: **83101669.6**

(22) Anmeldetag: **22.02.83**

(54) **Stellantrieb.**

(43) Veröffentlichungstag der Anmeldung:
29.08.84 Patentblatt 84/35

(45) Bekanntmachung des Hinweises auf die Patenterteilung:
24.09.86 Patentblatt 86/39

(84) Benannte Vertragsstaaten:
AT BE CH DE FR GB IT LI NL SE

(56) Entgegenhaltungen:
DE-A-1 600 713
DE-B-2 625 420
DE-U-1 775 295
DE-U-1 936 961
DE-U-8 207 567

(73) Patentinhaber: **Honeywell- Braukmann GmbH, Hardhofweg, D-6950 Mosbach/Baden (DE)**

(72) Erfinder: **Vollmer, Rudolf, Fr.Hölderlinstrasse 23, D-6950 Mosbach (DE)**

(74) Vertreter: **Herzbach, Dieter, Honeywell Europe S.A. Holding KG Patent- und Lizenzabteilung Kaiserleistrasse 55 Postfach 184, D-6050 Offenbach am Main (DE)**

EP 0 116 667 B1

## Beschreibung

Die vorliegende Erfindung bezieht sich auf einen Stellantrieb nach dem Gattungsbegriff des Anspruches 1, der insbesondere in Zonenventilen für Gebäudeheizungen Anwendung findet.

Ein solcher Stellantrieb ist beispielsweise aus der DE-A-1 600 713 bekannt. Dort ist an einem beweglichen Bügel über eine Halteplatte ein thermostatisches Arbeitselement befestigt. Das thermostatische Arbeitselement stützt sich mit seinem Arbeitskolben an einer Brücke ab, die ihrerseits mit einem ortsfesten in einem Gehäuse befestigten Bügel in Verbindung steht. Der ortsfeste Bügel weist seitliche Führungen auf, in der der bewegliche an seinem unteren Ende einen Ventilstößel tragenden Bügel gleitbar gelagert ist. Das thermostatische Arbeitselement ist von einer Heizwicklung umgeben, welche über Anschlußdrähte an eine Kontaktleiste angeschlossen ist. Die Kontaktleiste wird über eine Anschlußbuchse und ein durch sie hin durchgeführtes Kabel an eine Spannungsquelle angeschlossen.

Der bekannte Stellantrieb weist eine Vielzahl von Teilen auf, die einen großen Montageaufwand verursachen und die Herstellung des Stellantriebs verteuern. Darüber hinaus kann eine Reperatur bzw. ein Austausch des thermostatischen Arbeitselementes nicht vorgenommen werden, ohne daß die Spannungsversorgung des Stellantriebs abgeschaltet wird.

Es ist daher die Aufgabe der vorliegenden Erfindung, einen Stellantrieb der eingangs genannten Art so auszubilden, daß er einfach montiert werden kann, billig herzustellen ist, kleine Abmessungen aufweist und sicherheitstechnischen Aspekten voll genügt. Die Lösung dieser Aufgabe gelingt gemäß der im patentanspruch 1 gekennzeichneten Erfindung.

Weitere vorteilhafte Ausgestaltungen der Erfindung sind den Unteransprüchen entnehmbar.

Anhand der Figuren der beiliegenden Zeichnung sei im folgenden ein Ausführungsbeispiel des erfindungsgemäßen Stellantriebes beschrieben. Es zeigen:

Figur la einen axialen Längsschnitt durch den erfindungsgemäßen Stellantrieb; und

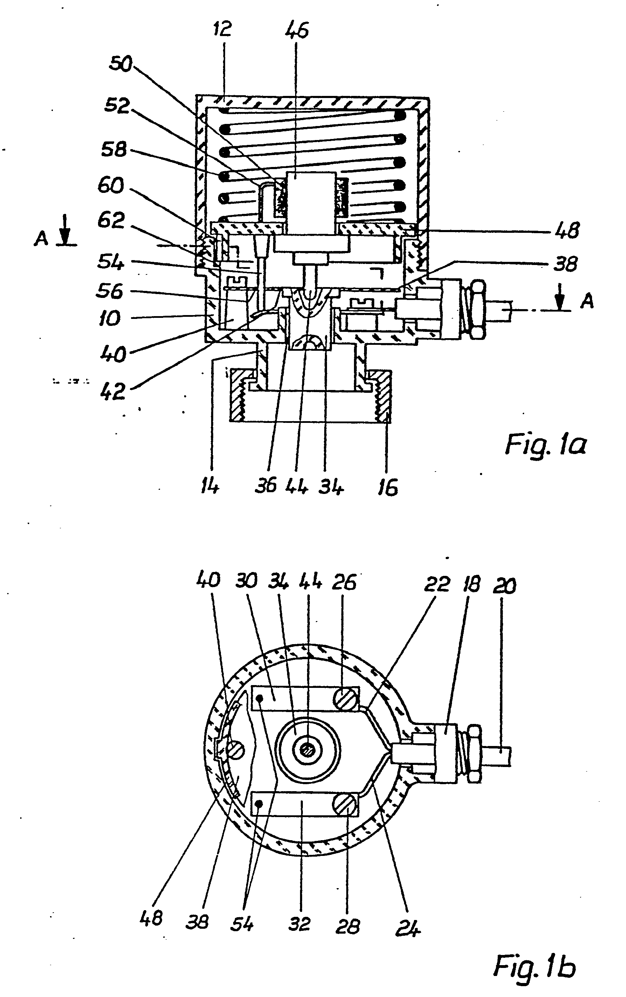

Figur 1b einen Schnitt entlang der Linie A-A in Figur 1.

Der Stellantrieb besteht aus einem Gehäuseunterteil 10 und einem Gehäuseoberteil 12, die beide topfförmig ausgebildet sind und aus Kunststoff hergestellt werden. Beide Gehäuseteile 10, 12 sind über zusammenwirkende Innen- und Außengewinde miteinander verbunden. Das Gehäuseunterteil 10 besitzt einen nach unten gerichteten zentralen rohrförmigen Anschlußflansch 14, der über eine Überwurfmutter 16 beispielsweise an ein nicht dargestelltes Ventil in einer Leitung anschließbar ist. Ferner ist seitlich an dem Gehäuseunterteil 10 eine Anschlußbuchse 18 angeordnet, über die ein Spannungsversorgungskabel 20 in das Gehäuseunterteil 10 hereingeführt ist. Das Kabel 20 ist mit seinen beiden Enden 22, 24 auf Anschlußklemmen 26, 28 geführt, die elektrisch mit zwei parallel zueinander angeordneten Kontaktplatten 30, 32 verbunden sind. Zwischen den Kontaktplatten 30, 32 ist ein Distanzstück 34 verschiebbar angeordnet, wobei dieses durch eine zentrale Öffnung 36 im Boden des Gehäuseunterteils 10 in den rohrförmigen Anschlußflansch 14 hineinragt.

Eine Isolierplatte 38 ist über wenigstens eine Befestigungsschraube 40 mit dem Boden des Gehäuseunterteils 10 verbunden und weist einen Abstand von diesem Boden auf, so daß sie die stromführenden Anschlußklemmen 26, 28 sowie die Kontaktplatten 30, 32 schützend abdeckt. Eine zentrale Öffnung 92 ist in der Isolierplatte 38 angeordnet, durch welche ein Arbeitskolben 44 eines thermostatischen Arbeitselementes 46 geführt ist. Das thermostatische Arbeitselement 46 sitzt in einer Trägerplatte 48 und ist von einer Heizwicklung 50 umgeben. Anschlußdrähte 52 der Heizwicklung 50 sind an in die Trägerplatte 48 eingelassene und nach unten ragende Kontaktstifte 54 angeschlossen. Die Trägerplatte 48 besteht ebenfalls aus isolierendem Material. Zur Durchführung der Kontaktstifte 54 sind in der Isolierplatte 38 entsprechende Öffnungen 56 angeordnet. Eine Druckfeder 58 drückt die Trägerplatte 48 gegen die Stirnseite des Gehäuseunterteiles. Gleichzeitig werden die Kontaktstifte 54 gegen die federnd eingespannten Kontaktplatten 30, 32 gedrückt. Die Trägerplatte 48 greift mit einer Nase 60 in eine im Gehäuseunterteil 10 angebrachte Nut 62 ein und ist somit gegen Verdrehen gesichert.

Der Aufbau des neuen Stellantriebs ist modular, wobei erst beim Zusammenbau die elektrische Verbindung hergestellt wird. Bei der Demontage des Stellantriebs wird die Heizwicklung von der Spannungsversorgung automatisch abgetrennt und die unter Spannung stehenden Teile in dem Gehäuseunterteil 10 sind gegen unbeabsichtigte Berührung geschützt. Wird an die Heizwicklung 50 Spannung angelegt, so erwärmt sich das Arbeitselement 46 und der Arbeitskolben 44 führt eine Hubbewegung aus. Wird der Arbeitskolben in seiner Hubbewegung begrenzt, z.B. beim Erreichen der Schließstellung eines mit dem Stellantrieb zusammenwirkenden Ventils, so bewegt sich die Trägerplatte 48 relativ zum Arbeitskolben 44 entgegen der Kraftrichtung der Druckfeder 58, wobei die Kontaktstifte 54 von den zugeordneten Kontaktplatten 30, 32 abheben und den Stromfluß automatisch unterbrechen.

## Patentansprüche

Stellantrieb mit einem heizbaren thermostatischen Arbeitselement (46), welches in einer Trägerplatte (48) angeordnet ist und dessen Arbeitskolben (44) über ein Distanzstück (34) auf ein Stellglied einwirkt, wobei eine das Arbeitselement (46) umgebende Heizwicklung (50) an elektrische Kontakte (30, 32, 54) anschließbar ist, dadurch gekennzeichnet, daß das thermostatische Arbeitselement (46), die elektrische Heizwicklung (50), die Trägerplatte (48) und in ihr angeordnete Kontaktstifte (54) eine vorgefertigte Baueinheit bilden, daß die vorgefertigte Baueinheit in einem Gehäuseunterteil (10) angeordnet ist, welches mit einem Gehäuseoberteil (12) verbindbar ist, und daß eine Druckfeder (58) zwischen dem Gehäuseoberteil (12) und der Trägerplatte (48) im verbundenen Zustand der Gehäuseteile (10, 12) die Kontaktstifte (54) gegen zugeordnete Kontaktplatten (30, 32) und die Trägerplatte (48) gegen das Gehäuseunterteil (10) drückt.

Stellantrieb nach Anspruch 1, gekennzeichnet durch eine über den Kontaktplatten (30, 32) in dem Gehäuseunterteil (10) angeordnete Isolierplatte (38), die mit Durchbrüchen (42, 56) für den Arbeitskolben (44) des Arbeitselementes (46) und die Kontaktstiite (54) der Trägerplatte (48) versehen ist.

3. Stellantrieb nach Anspruch 2, dadurch gekennzeichnet, daß die Kontaktplatten (30, 32) fest verdrahtet sind und in einem das Distanzstück (34) zwischen sich aufnehmenden Abstand parallel zueinander angeordnet sind.

4. Stellantrieb nach Anspruch 1, dadurch gekennzeichnet, daß sowohl das Gehäuseoberteil (12) als auch das Gehäuseunterteil (10) topfförmig ausgebildet sind und aus Kunststoff bestehen.

5. Stellantrieb nach Anspruch 1, dadurch gekennzeichnet, daß die Trägerplatte (48) axial gegen die Druckfeder (58) verschiebbar, aber verdrehsicher, z.B. über eine Nase (60) und eine Nut (62), geführt ist.

## Claims

1. Actuator comprising a heatable thermostat working element (46) which is mounted in a carrier plate (48) with the working piston (44) actuating via a separator piece (34) onto a control element, whereat a heating winding (50) surrounding the working element (46) is connectable to electrical contacts (30, 32, 54), characterized in that the thermostatic working element (46), the electrical heating winding (50), the carrier plate (48) and contact pins (54) inserted in said plate form a prefabricated assembly, that the prefabricated assembly is inserted into a base portion (10) of a housing which may be connected to an upper portion (12) of said housing and that a compression spring (58) between said upper portion (12) and said carrier plate (48) forces the contact pins (54) towards related contact plates (30, 32) and the carrier plate (48) towards said base portion (10) when the housing portions (10, 12) are connected to each other.

2. Actuator according to claim 1, characterized by an isolating plate (38) above the contact plates (30, 32) within said base portion (10), said isolating plate having openings (42, 56) for the working piston (44) of said working element (46) and for the contact pins (54) of said carrier plate (48).

3. Actuator according to claim 2, characterized in that the contact plates (30, 32) are hardwired and that they are arranged parallel with respect to each other with a separation providing space for said separator piece (34). 4. Actuator according to claim 1, characterized in that the upper portion (12) as well as the base portion (10) of said housing are cup-shaped and consist of plastics.

5. Actuator according to claim 1, characterized in that the carrier plate (48) is displaceable against the force of said compression spring (58) but is secured against rotation, e.g. by means of a projection (60) and a groove (62).

## Revendications

1. Organe de commande comportant un élément de travail thermostatique pouvant être chauffé (46) logé dans une plaque support (48) et dont le piston de travail (44) agit par l'intermédiaire d'une entretoise (34) sur un élément de commande, l'enroulement chauffant (50) entourant l'élément de travail (46) pouvant être connecté aux contacts électriques (30, 32, 54), caractérisé en ce que l'élément de travail (46), l'enroulement chauffant électrique (50), la plaque support (48) et les broches de contact (54) montées dans la plaque forment une unité préfabriquée, en ce que l'unité préfabriquée est disposée dans la partie inférieure (10) d'un boîtier, qui peut être réunie à la partie supérieure (12) du boîtier et en ce qu'un ressort de compression (58) disposé entre la partie supérieure (12) et la plaque support (48) applique les broches de contact (54) contre les plaques de contact associées (30, 32) et la plaque support (48) contre la partie inférieure (10) du boîtier, les parties (10, 12) étant assemblées.

2. Organe de commande selon la revendication 1, caractérisé par une plaque isolante (38) disposée dans la partie inférieure (10) au-dessus des plaques de contact (30, 32) cette plaque isolante étant munie de passages (42, 56) pour le piston de travail (44) de l'élément de travail (46) et les broches de contact (54) de la plaque support (48).

3. Organe de commande selon la revendication 2, caractérisé en ce que les plaques de contact (30, 32) sont connectées à un câble et sont disposées parallélement l'une par rapport à l'autre et à un certain intervalle l'une de l'autre, une entretoise (34) étant disposée dans l'intervalle.

4. Organe de commande selon la revendication 1, caractérisé en ce que la partie supérieure (12) et la partie inférieure (10) du boîtier sont en forme de pot et consistent en une matière synthétique.

5. Organe de commande selon la revendication 1, caractérisé en ce que la plaque support (48) est mobile axialement contre l'action du ressort de compression (58), et garantie contre toute rotation, par exemple au moyen d'un tenon (60) et d'une rainuré (62).

Fig. 1a

Fig. 1b